Europäisches Patentamt

European Patent Office

Office européen des brevets

(19)

(11) Publication number: **0 202 198**
**A1**

# (12) EUROPEAN PATENT APPLICATION

(21) Application number: **86830018.7**

(22) Date of filing: **22.01.86**

(51) Int. Cl.⁴: **F 16 K 3/20**

(30) Priority: **24.01.85 IT 6706385**

(43) Date of publication of application:
**20.11.86 Bulletin 86/47**

(84) Designated Contracting States:
**AT BE CH DE FR GB IT LI LU NL SE**

(71) Applicant: **FIAT T.T.G. S.p.A.**
**Via Cuneo 20**
**I-10152 Torino(IT)**

(72) Inventor: **Falferi, Giorgio**
**Corso Belgio 132**
**I-10153 Torino(IT)**

(74) Representative: **Buzzi, Franco et al,**
**c/o Jacobacci-Casetta & Perani S.p.A. Via Alfieri, 17**
**I-10121 Torino(IT)**

(54) **Large-sized on-off valve of high throughput, particularly for vacuum systems and nuclear fusion installations and the like.**

(57) A large-sized on-off valve for vacuum systems comprises a housing (1) with two coaxial passages (2,3) whose inner ends have two associated annular valve seats (4, 5) with which an obturator (22) cooperates, the obturator being movable between a position of opening and a position of closing the passages. The two valve seats and the obturator are movable axially relative to each other, and actuator means (12) are provided for moving them together and apart.

EP 0 202 198 A1

./...

FIG. 1

Large-sized on-off valve of high throughput, particularly for
vacuum systems and nuclear fusion installations and the like.

The present invention relates to large-sized on-off
valves for vacuum conveyor systems for fluids,
particularly but not necessarily contaminating fluids
in nuclear fusion installations.

It is known that valves of this type are subject to
extremely restrictive safety regulations in order to
avoid any risk of leakage of even minimal quantities of
the contaminating fluid which flows within the system.
Such valves must also be adapted for connection to
large- diameter pipes, normally of the order of 1500
mm, must be able to operate without operational changes
within a temperature range which can vary from ambient
temperature up to 250°C, and must also be made almost
entirely of metal components.

Within this field of use, on-off valves are known which
comprise a housing having two coaxial passages
sealingly connected to respective pipelines, and two
annular valve seats associated with the inner ends of
these passages and with which there cooperates an
obturator movable by drive means between a position of
opening and a position of closing the passages.

In these known valves, the obturator, which is normally
a slidable gate, must necessarily ensure perfect
sealing in its position of closing the two seats of the
valve. The sealing contact is generally achieved by
the obturator itself at the end of its closing
movement; in other words, the obturator fulfils both
the action of cutting off the flow of fluid through the
valve and that of sealingly closing the two annular
seats.

Consequently, the obturator must necessarily have a size dependent on the maximum force it exerts in the final stage of its closing stroke and in the initial stage of its opening stroke, when it slides relative to the annular seats. This sliding may also be a cause of premature wear with consequent valve sealing problems.

Moreover, in known valves the movement of the obturator is effected by complicated drive mechanisms which generally operate within the stream of fluid passing through the valve and which can cause breakdowns due to seizure of these mechanisms.

A further disadvantage of known valves lies in the fact that, in the open condition of the obturator, there are discontinuities in the wall of the fluid passage in the zone between the two annular seats, resulting in a less favourable configuration from a fluid dynamic aspect and a smaller system throughput.

Finally, the known valves have excessive sizes which result in installation problems.

The object of the present invention is to avoid these disadvantages and this object is achieved by a large — sized on-off valve for vacuum systems, particularly for nuclear fusion installations, characterised in that the annular valve seats and the obturator are movable axially relative to each other, and in that actuator means are provided for moving them together and apart axially.

The axial relative movement is preferably, but not necessarily, achieved by keeping the obturator stationary and moving the two valve seats relative thereto.

In the valve according to the invention, the valve seats are moved towards the obturator at the end of the closing movement and at the end of the opening movement of the obturator so as to ensure, in the first case, the necessary hermetic sealing and, in the second case, perfect continuity of the walls of the fluid passage. Thus, the obturator has the sole function of shutting off the fluid, while the action which brings about the sealing contact between the obturator and the annular seats is fulfilled by the latter. This allows a considerable simplification in the drive means for the obturator, which can be placed outside the zone of the fluid passage with considerable advantages from the point of view of reliability in operation and reduction in the bulk of the valve.

The possibility of axial movement of the valve seats enables the wear on the parts which seal with the obturator to be reduced considerably, at the same time ensuring a considerable improvement in the throughflow of the system when the obturator is in its open position.

To advantage, the actuator means which effect the axial approach and withdrawal movements of the annular seats relative to the obturator include resilient toggle systems to ensure effective contact pressure.

In one embodiment of the invention, the obturator is constituted by a tubular body which is rotatable between the open and closed positions about an axis perpendicular to the axis of the passages, and has two pairs of mutually perpendicular annular abutments arranged to cooperate sealingly with the seats in the open and closed positions of the obturator respectively.

Alternatively, the obturator may be constituted by a plate which is slidable between the open and closed positions in a direction perpendicular to the axis of the passages, and has a pair of opposing annular abutments arranged to cooperate sealingly with the seats in the closed position of the obturator.

The invention will now be described in detail with reference to the appended drawings, provided purely by way of non-limiting example, in which:

Figure 1 is a schematic axial section of a valve according to the invention, showing the obturator in the open condition in the upper part of the drawing and in the closed condition in the lower part,

Figure 2 is a cross-section taken on the line II-II of Figure 1,

Figure 3 is a cross-section taken on the line III-III of Figure 2, on an enlarged scale,

Figure 4 illustrates a variant of Figure 1, and

Figure 5 is a section taken on the line V-V of Figure 4.

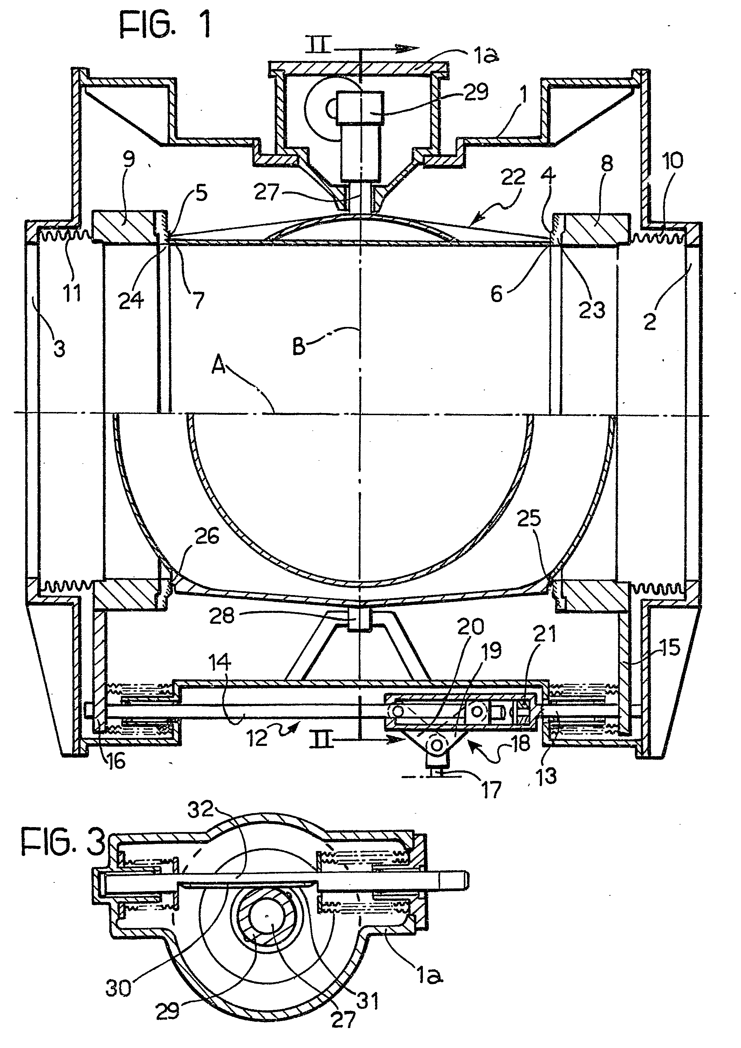

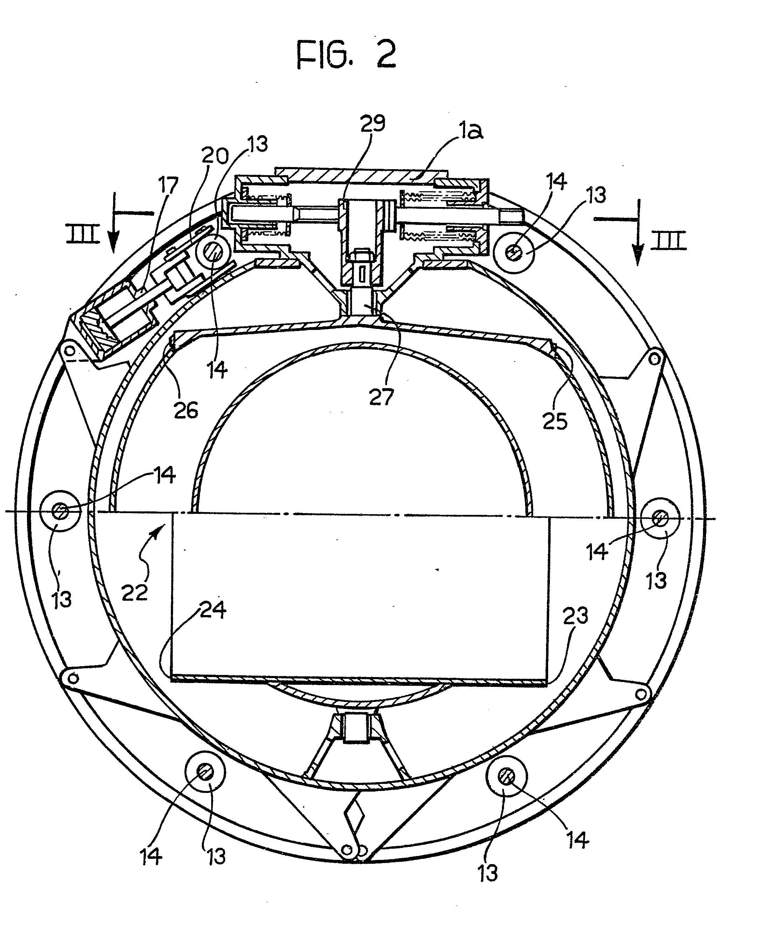

Referring initially to Figures 1 to 3, a generally cylindrical metal housing with an axis A is indicated 1 and, in correspondence with its end faces, has two apertures 2, 3 aligned coaxially with the axis A. The two apertures 2, 3 are used for the hermetically-sealed connection of the body 1 to the ends of two ducts, not illustrated, of a vacuum conveyor system for contaminating fluids, for example mixtures of tritium, deuterium and helium in nuclear fusion installations. Given the considerable dimensions of these ducts, the diameter of the apertures 2 and 3 is normally of the order of 1500 mm.

The two apertures 2 and 3 thus define two coaxial passages for the fluid which is to flow through the valve and these passages are delimited at the respective inner ends by facing annular valve seats 4, 5. The valve seats 4 and 5 are carried by two annular members 8, 9 disposed inside the housing 1 and movable along the axis A thereof. The annular members 8 and 9 are connected to the end faces of the housing 1 by respective bellows 10, 11 and are interconnected by drive members, generally indicated 12, for moving them together and apart simultaneously. in the manner explained below.

In effect, each drive member 12 (of which there are six in the example illustrated) includes two axial rods 13, 14 whose outer ends are fixed to radial appendages 15, 16 of the annular members 8, 9 and whose inner ends are connected to respective pressurised- fluid linear actuators 17 carried by the housing 1.

Each pair of rods 13, 14 is connected to its actuator 17 by a toggle mechanism 18 including a pair of connecting rods 19, 20 and a pack of Belleville washers 21.

It will be clear that the extension of the actuators 17 causes the two annular members 8,9 and hence the annular seats 4, 5 to move together axially, while the contraction of these actuators 17 causes them to move apart.

A rotary obturator, generally indicated 22, is constituted by a tubular body rotatable about an axis B perpendicular to the axis A of the housing 1. The obturator 22, whose inner diameter is substantially equal to that of the annular members 8, 9, has a first pair of annular abutments 23, 24 formed at its ends, and a second pair of annular abutments 25, 26 formed on its outer side wall and disposed perpendicular to the abutments 23 and 24. The annular abutments 25, 26 have sealing members 6 and 7.

The obturator 22 is rotatably supported in the housing 1 by a pair of diametrally opposed pins 27, 28 the first of which is rotatably coupled with a bush 29 projecting into a part 1a of the housing 1 and to which are fixed two flexible belts 30, 31 attached to a slidable rod 32 operated by a pressurised-fluid actuator, not shown. Clearly, the movement of the rod 32 in one direction or the other causes the rotation of the obturator 22 in one sense or the other about the axis B between an open position, illustrated in the upper part of Figure 1, and a closed position illustrated in the lower part in the same Figure.

In the open position, the obturator 22 is aligned coaxially with the annular members 8, 9 so as to allow the passage of fluid through the valve in use. In the closed position, communication between the apertures 2 and 3 is cut off, so that the passage of fluid is prevented.

In both positions, the sealing contact between the obturator 22 and the valve seats 4 and 5 is achieved by virtue of the axial moving together of the annular members 8 and 9 effected by the actuators 12. In the open position of the valve, the actuators 12 ensure contact between the seats 4 and 5 and the annular abutments 23 and 24 of the obturator 22, while in the closed position the sealing contact obviously occurs between the seats 4 and 5 and the annular abutments 25 and 26. This sealing contact is ensured since the arms 19 and 20 of the toggle mechanisms 18 pass beyond the dead-point, with the aid of the reaction of the washers 21.

Naturally, the conformation of the valve according to the invention and its constructional details could be varied widely with respect to that described and illustrated with reference to Figures 1 to 3.

Thus, for example, it is clear that the obturator 22 could be rotated by gears or equivalent mechanisms instead of by the belts 30 and 31.

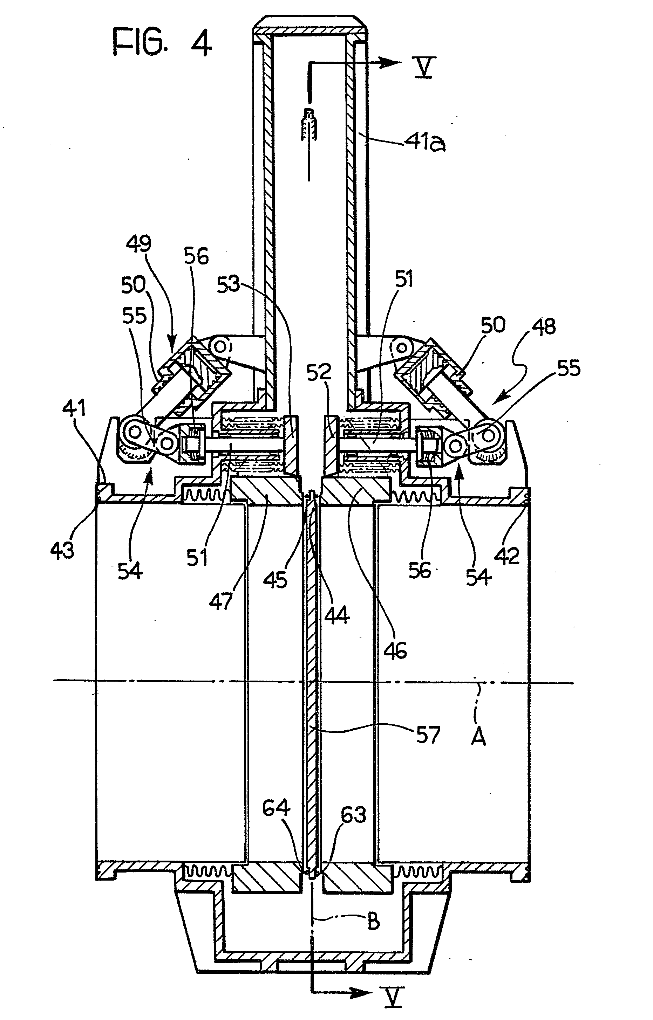

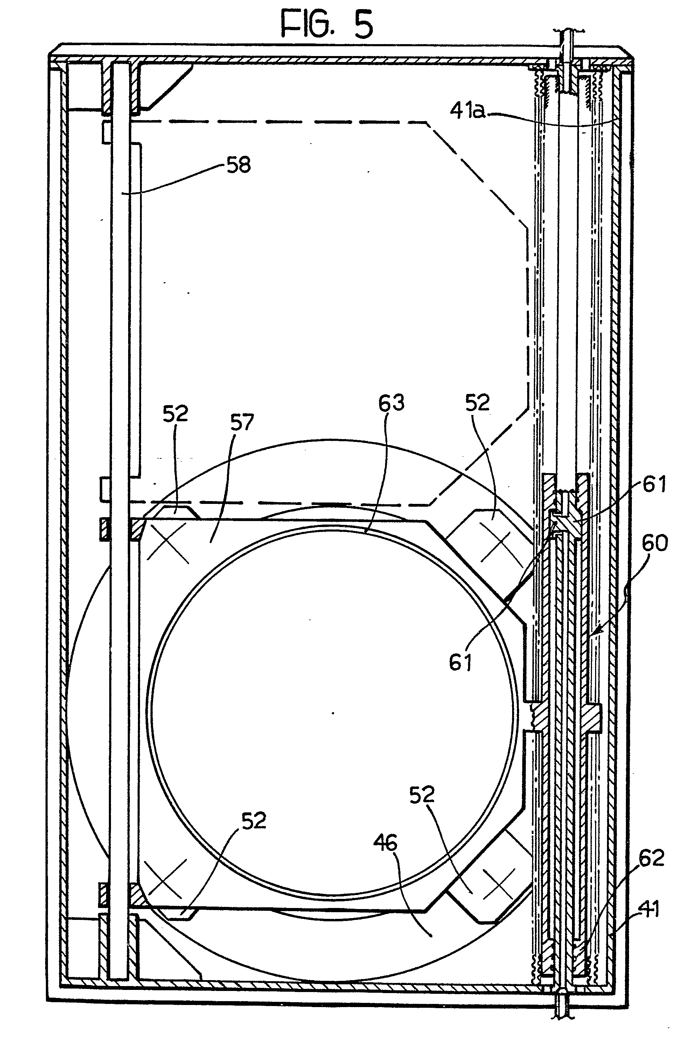

Furthermore, the valve could be provided with a slidable gate obturator instead of the rotatable obturator 22, as illustrated, for example, in Figures 4 and 5.

In this case also, the valve body, generally indicated 41, has two apertures 42, 43 aligned along the axis A of the housing and defining two passages limited at their respective inner ends by two annular valve seats 44, 45. The two seats 44, 45 are carried by two annular members 46, 47 which can be moved towards and away from each other along the axis A by respective actuators, generally indicated 48, 49. Each of these actuators 48, 49 includes a pressurised-fluid jack 50 supported outside the housing 41 and connected to a rod 51 fixed in turn to a radial appendage 52, 53 of the respective annular member 46, 47 by a toggle system 54. This toggle system 54 includes a connecting rod 55 connected at one end to the jack 50 and at the other end to the rod 51 by a pack of Belleville washers 56.

As stated, the obturator is constituted in this case by a plate 57 slidable in a direction B perpendicular to the axis A of the body 41, between a closed position of the valve indicated in Figures 4 and 5, in which passage between the apertures 42 and 43 is blocked, and an open position in which the plate 57 is disposed within an extension 41a of the housing 41.

As shown in Figure 5, the plate 57 is movable along a guide 58 and is driven by a pressurised-fluid jack 60 with a fixed piston 61 and a movable cylinder 62 fixed to the plate 57.

This plate 57 has two opposed annular sealing members 63, 64 with which the two annular seats 44 and 45 cooperate in the closed position of the valve, under the action of the actuators 48.

In the open position of the valve, the two seats 44 and 45 are pressed directly against one another by the actuators 48, enabling perfect continuity of the wall of the fluid passage to be ensured.

Naturally, the principle of the invention remaining the same, the constructional details and forms of embodiment may be varied widely with respect to that described and illustrated, without thereby departing from the scope of the present invention.

For example, by way of a variant, a configuration may be provided in which one of the two annular valve seats is fixed and the obturator and the other valve seat are movable axially relative to the fixed seat.

It is also clear that the valve according to the invention could be usefully applied to low-pressure cut-off systems in various fields other than the nuclear field.

## CLAIMS

1. Large-sized on-off valve for vacuum systems, particularly for nuclear fusion installations and the like, of the type comprising a housing having two coaxial passages sealingly connected to respective pipelines, and two annular valve seats associated with the inner ends of these passages and with which there cooperates an obturator movable by drive means between a position of opening and a position of closing the passages, characterised in that the valve seats (4, 5; 44, 45) and the obturator (22; 57) are movable axially relative to each other, and in that actuator means (12, 48) are provided for moving them together and apart.

2. Valve according to Claim 1, characterised in that the relative axial movement is achieved by keeping the obturator (22; 57) stationary and moving both the valve seats (4, 5; 44, 45) axially relative to the obturator (22; 57).

3. Valve according to Claim 1, characterised in that the relative axial movement is achieved by keeping one of the two valve seats (4, 5; 44, 45) stationary and moving the obturator (22; 57) and the other valve seat axially relative to the stationary valve seat.

4. Valve according to Claim 1, characterised in that the actuator means (12, 48) include toggle transmission systems (18, 54).

5. Valve according to Claim 1, characterised in that the obturator is constituted by a tubular body (22) which is rotatable between the open and closed positions about an axis (B) perpendicular to the axis (A) of the passages (2, 3), and which has two pairs of annular abutments (23, 24; 25, 26) perpendicular to each other and arranged to cooperate sealingly with the annular seats (4, 5) in the open position and the closed position of the obturator (22) respectively.

6. Valve according to Claim 1, characterised in that the obturator is constituted by a plate (57) which is slidable between the open and closed positions in a direction (B) perpendicular to the axis (A) of the passages (42, 43), and which has a pair of annular opposing abutments (63, 64) arranged to cooperate sealingly with the annular seats (44, 45) in the closed position of the obturator (57), the annular seats being moved together significantly as a result of the effects of the through-flow.

FIG. 1

FIG. 3

# FIG. 2

FIG. 4

3/4

0202198

FIG. 5

## DOCUMENTS CONSIDERED TO BE RELEVANT

EP 86830018.7

| Category | Citation of document with indication, where appropriate, of relevant passages | Relevant to claim | CLASSIFICATION OF THE APPLICATION (Int. Cl.4) |
|---|---|---|---|
| Y | DE - C - 1 190 278 (H. RAPPOLD & CO. G.M.B.H.) <br> * Column 3, lines 14-61; fig. 1-3 * | 1-3 | F 16 K 3/20 |
| Y | AT - B - 198 084 (PÖRRINGER & SCHINDLER G.M.B.H.) <br> * Page 2, lines 12-26; fig. * | 1-3 | |
| A | DE - A1 - 2 840 618 (LEYBOLD-HERAEUS G.M.B.H.) <br> * Totality * | 1 | |
| A | DE - A1 - 2 355 781 (KOPPERS CO. INC.) <br> * Fig. 4,5 * | 1-3 | |
| A | US - A - 2 156 967 (E.E. BROSIUS) <br> * Fig. 3,6 * | 1-3,4,6 | TECHNICAL FIELDS SEARCHED (Int. Cl.4) <br><br> F 16 K 3/00 <br> F 16 K 51/00 <br> G 21 B 1/00 <br> G 21 D 1/00 |

The present search report has been drawn up for all claims

| Place of search | Date of completion of the search | Examiner |
|---|---|---|
| VIENNA | 01-09-1986 | ROUSSARIAN |